# FASCICULE DE BREVET EUROPEEN

(11) **EP 1 044 358 B1**
(45) Date de publication et mention de la délivrance du brevet: **02.06.2004**
(21) Numéro de dépôt: 98958952.8
(22) Date de dépôt: 03.12.1998
(51) Int. Cl.: G01N 11/14, G01N 27/06, G01N 13/00

(54) **PROCEDE DE CARACTERISATION DE FLUIDES COMPLEXES ET APPAREILS RESULTANT DE CEDIT PROCEDE**
VERFAHREN ZUR CHARAKTERISIERUNG KOMPLEXER FLÜSSIGKEITEN UND VORRICHTUNGEN ZUR DURCHFÜHRUNG DES VERFAHRENS
METHOD FOR CHARACTERISING COMPLEX FLUIDS AND APPLIANCES RESULTING FROM SAID METHOD

(30) Priorité: 04.12.1997 FR 9715577
(43) Date de publication de la demande: 18.10.2000
(73) Titulaire: RHEOCONTROL, 33600 Pessac (FR)
(72) Inventeur: RHEOCONTROL, 33600 Pessac (FR)
(74) Mandataire: Audier, Philippe André
(86) Numéro de dépôt international: PCT/FR1998/002614
(87) Numéro de publication internationale: WO 1999/030129

(56) Documents cités:
- EP-A- 0 528 078
- WO-A-95/12122
- FR-A- 2 737 780
- GB-A- 2 191 280
- SU-A- 1 719 969
- US-A- 3 667 286
- US-A- 4 352 287
- US-A- 4 544 489
- MANDRAKE ET AL.: "LARGE-SCALE WINDOWS 95 BASED DATA ACQUISITION SYSTEM" COMPUTERS IN PHYSICS,septembre 1997, pages 498-507, XP002099953
- SOUBIRAN ET AL.: "CONDUCTIVITY AND DIELECTRIC MEASUREMENTS . . ." EUROPHYSICS LETTERS, vol. 31, no. 4, 1995, pages 243-248, XP002074887 cité dans la demande
- LINK ET AL: "light scattering from dilute polymers solutions in shear flow" MACROMOLECULES, vol. 26, 1993, pages 464-471, XP002099951
- PANIZZA ET AL.: "dynamic study of onion phases under shear flow" EUROPEAN PHYSIAL JOURNAL, vol. 4, no. 1, juillet 1998, pages 65-74, XP002099954
- JAMAL: "graphical object-oriented programming with Labview" NUCLEAR INSTRUMENTS AND METHODS IN PHYSICS RESEARCH A, no. 352, 1994, pages 438-441, XP002099952
- PATENT ABSTRACTS OF JAPAN vol. 010, no. 072 (P-438), 22 mars 1986 & JP 60 210751 A (KOGYO GIJUTSUIN;OTHERS: 0J), 23 octobre 1985
- BLOCK: "A COUETTE CELL . . ." JOURNAL OF PHYSICS E. SCIENTIFIC INSTRUMENTS., vol. 16, no. 9, septembre 1983, pages 896-902, XP002074888 BRISTOL GB
- SIERRO ET AL.: "STRUCTURE OF A LYOTROPIC LAMELLAR PHASE UNDER SHEAR" PHYSICAL REVIEW LETTERS, vol. 78, no. 8, 24 février 1997, pages 1496-1499, XP002074889

## Description

### Domaine de l'invention:

La présente invention concerne un nouveau procédé de mesures et d'observations des caractéristiques de fluides complexes en évolution depuis le début de leur mise en oeuvre jusqu'au terme de leur fabrication. A partir de ces procédés dont certaines phases sont connues vont être conçus plusieurs appareils dont nous donnerons essentiellement les deux modes de réalisations les plus intérèssants.

Les fluides dénommés complexes du type : émulsions, gels, dilutions de liquides différents, dispersions etc.. sont très utilisés dans l'industrie agro-alimentaire, l'industrie des produits de beauté, notamment:les cosmétiques dans l'industrie pétrolière et de manière générale dans l'industrie chimique. La complexité de ces fluides tient au fait que leur caractérisation dépend autant de la composition chimique que des processus de transformation et de conservation ainsi que de nombreux autres paramètres. C'est ainsi que très souvent une même formulation chimique ne permet pas de :
Reproduire industriellement directement la formulation du laboratoire.
Reproduire industriellement des produits identiques d'un lot de fabrication à un autre.
Obtenir des particules de taille donnée.
Garantir que le viellissernent (coalescence, décantation) aura une durée constante.

C'est également tres difficile de connaitre les qualités émulsifiantes des produits par exemple dans le cas:
D'un émulsifiant lié à d'autres composants
D'une géométrie de malaxage pour une formulation recherchée
Prenons le cas de l'industrie alimentaire (par exemple de la mayonnaise). Si on considère ce type d'émulsion, on se retrouve avec une probabilité de résultat non satisfaisante (taux de défaillance élevé) et donc inacceptable pour des fabrications industrielles.
Prenons un deuxième exemple dans le cas de l'industrie des produits de beauté, soit: une crème hydratante, on arrive pour certains lots, à l'incapacité de mettre en oeuvre le procédé de fabrication pour arriver au résultat, c'est à dire que la préparation ne va pas émulsionner, ce qui entraine des rebus couteux inutilisables.

Pour arriver à un bon résultat (fiabilité s'approchant de 100%) il faut caractériser tous les paramètres physico-chimiques en cours d'élaboration des procédés de fabrications. C'est justement ce que se propose de réaliser l'invention avec des appareils de mesure ou controle adaptés à ces besoins.

### ART ANTERIEUR

Les documents de l'art antérieur accessibles au public utilisent des moyens connus qui peuvent améliorer de manière empirique les procédés de fabrication de ces fluides complexes. Les nombreuses publications
existantes décrivent des moyens qui sont plutôt des juxtapositions de mesure qui améliorent un peu la connaissance des fluides complexes sans en résoudre complètement les problèmes d'élaboration.

L'homme du métier dispose actuellement d'un certain nombre d'outils de contrôle et de mesure qui cependant ne lui permettent pas de prédire la qualité de son produit, car ces informations ne sont que parcellaires et non coordonnées.

Les principaux paramètres (mesures et obervations) essentiels au bon déroulement d'une fabrication de fluides complexes sont:
1-Le contrôle de la viscosité (paramètre le plus souvent regardé)
2-Le contrôle par microscopie optique qui permet d'identifier la texture du fluide notamment les tailles de grains ou de particules soit par prélèvements soit en présence de forces de cisaillement.
3-Une mesure de taille moyenne de particules par diffusion d'un rayonnement par un moyen de laboratoire (du type cellule de COUETTE) toujours par exemple sous effet de cisaillement ou par prélèvement et dilution
4-Une mesure de conductivité diélectrique des matériaux toujours en cours de L'élaboration du fluide complexe.
5-Un contrôle de la turbidité par mesure de l'intensité lumineuse transmise à travers l'échantillon (cas de sédimentation)
Toutes ces mesures sont faites avec des appareils distincts soit avec des prélèvements qui perturbent le milieu ou soit avec des appareils ayant un moyen monofonctionnel qui ne peuvent révéler l'état exact du fluide complexe.

### 1- Cas des prélèvements

La perturbation du milieu entraine une mesure non conforme avec l'état de celui-ci pour des raisons diverses décalage de temps, incidence sur le milieu ..etc

### 2-Cas d'une seule mesure "in situ"

Une mesure ou observation ne peut pas permettre, à elle seule de caractériser l'ensemble du fluide complexe tous les paramètres obtenus présentent sans corrélation une grande incohérence.

Nous citerons cependant trois documents qui s'approchent du problème à résoudre, mais cependant ne le résolvent pas complètement.

La Publication SOUBIRAN de l'EUROPHYSICS LETTERS 31-4 pages 243 à 248 de 1995 décrit une géométrie de mesure de la conductibilité diélectrique sous cisaillement. Elle ne permet pas cependant d'obtenir un résultat qui soit utilisable de manière industrielle, car la mesure est restrictive, et l'acquisition n'est pas directement exploitable.

Le Brevet US 4 3522 87A (ORTH HEINZ W ET AL) décrit un appareil informatisé qui permet d'analyser de manière précise la seule viscosité sous cisaillement, paramètre mécanique globalement insuffisant pour permettre de caractériser un fluide complexe, c'est un viscosimètre particulier, dont le principe est différend de celui de la présente invention.

Le Document WO 95 12122 (AGRONOMIQUE INST NAT RECH) est un appareil qui procède seulement à une mesure de conductibilité pendant le brassage du fluide complexe ; ce qui est insuffisant pour en connaitre l'évolution.

Pour bien caractériser les fluides complexes en cours de procédé, on peut soit analyser de façon exhaustive une seule caractéristique physique, par exemple la conductivité électrique en disposant du maximum de mesures affèrantes à cette grandeur, soit analyser l'ensemble des caractéristiques physiques significatives afin d'établir des corrélations entres mesures et observations conduisant à définir deux types d'appareils: le premier plutôt monofonctionnel bien adapté au contrôle en fabrication le deuxième multifonctionnel qui permet de mieux caractériser la formulation des fluides complexes.
Dans le cas de notre invention : ce nouveau procédé P permet de caractériser et de mesurer tous les paramètres accessibles du fluide complexe par des opérations de mesures et de caractérisations simultanées effectuées sur un même échantillon en
- gérant en même temps les moyens de pilotage en liaison avec les moyens de mesure en affichant donc simultanément les données sur un écran d'ordinateur,
- stockant en mémoire toutes les données rappelables à chaque instant,
- établissant et en utilisant des corrélations notamment temporelles avec cesdites données qui sont directement fonction des caractéristiques des fluides complexes que l'on veut gérer,
ce qui donne des mesures significatives permettant d'arriver à des fabrications industrielles. Ce procédé consistera ensuite à comparer simultanément les résultats d'analyse obtenus précédemment sur les fluides aux résultats obtenus en fabrication, afin d'en déduire les corrélations permettant de prédire l'évolution de la fabrication du fluide complexe La présente invention répond à ces exigences dans deux modes de réalisation d'appareils qui dépendent du précédent procédé et qui vont maintenant être décrits l'un après l'autre,dans deux exemples de réalisations non limitatifs

### EXPOSE DE L'INVENTION

L'invention concerne un procédé de caractérisation de fluides complexes, consistant à soumettre lesdits fluides à un cisaillement contrôlé dans une cellule de rhéologie classique ou turbulent dans une cellule de brassage, suivant divers protocoles expérimentaux en faisant varier le taux de cisaillement, la température, des injections de composants, et à observer et mesurer, en fonction de l'évolution desdits paramètres l'évolution :
- de la structure microscopique,
- de la viscosité,
- de la taille des grains,
- des conductivités ou constantes diélectriques, dans plusieurs directions et plusieurs points,
caractérisé en ce que :
toutes ces mesures et observations sont réalisées simultanément sur le même échantillon et affichées simultanément sur un même écran, grâce à l'observation microscopique de l'évolution de phénomènes physiques tels que l'élmulsification, la coalescence, la dilution, la floculation, la décantation..., et il est possible d'établir des corrélations entre :
- d'une part, les mesures électriques de taille de grain, de viscosité, de conductibilité électrique,
- et d'autre part, l'homogénéité du milieu, sa texture, sa stabilité, son pouvoir émulsifiant et l'efficacité des différentes géométries de brassage du fluide complexe,
   pour piloter et contrôler des processus de fabrication d'émulsions, gels, dilutions, mousses.

Dans un premier mode de réalisation l'invention concerne un appareil automatisé pour la mise en oeuvre de ce procédé comprenant :
- un moyen de cisaillement contrôlé dans une cellule d'analyse classique de type Couette de Mooney ou Cône-plan,
- un moyen d'observation microscopique sous cisaillement, comprenant :
   - un microscope avec son système de mise au point,
   - un système d'éclairage soit direct à traversa l'arbre du rotor soit épiscopique, le rotor étant alors réfléchissant,
   - une caméra numérique et son électronique d'acquisition et de traitement des images,
- un système de diffusion de la lumière et/ou de contrôle de la turbidité comprenant :
   - une source laser
   - un système d'écran luminescent et un système optique permettant d'obtenir le spectre de diffusion significatif de la taille des particules,
   - une caméra numérique et son électronique d'acquisition et de traitement des images,
- un système de déplacement et de va et vient permettant de faire une mise au point horizontale et de réaliser successivement les observations microscopiques puis la diffusion de la lumière,
- un système automatique de monte et baisse permettant de rapprocher la rotor du stator,
- des moyens de contrôle et de régulation de la température,
- un moyen de mesure de la viscosité
- des moyens de mesure de la conductivité ou de constante diélectrique, comportant :

- plusieurs paires d'électrodes affleurant, sur la surface interne de la cellule d'analyse,
- tous ces moyens étant commandés et les résultats étant acquis stockés et affichés par des moyens informatiques,
la combinaison de ces moyens permet test de réaliser, simultanément en temps réel, sur le même échantillon :
- des observations microscopiques et des mesures de tailla ou de turbidité par diffusion de la lumière sur des produits aussi bien translucides que diffusants ou turbides, le rotor étant conique et le microscope et l'appareil de diffusion se déplaçant horizontalement afin de sélectionner l'épaisseur adaptée à une bonne observation,
- des mesures de l'évolution de la viscosité,
- des mesures d'évolution de la conductivité ou de la résistivité moyenne dans deux sens par rapport au sens de cisaillement,
un logiciel spécifique, permettant de gérer simultanément la totalité de ces moyens et d'afficher dans plusieurs fenêtres de l'écran :
- les paramètres physiques et leur évolution au cours de l'expérience sous forme de courbes,
- les images fixes ou dynamiques d'observation microscopique et de diffusion de la lumière,
- les valeurs instantanées de toutes les mesures et les courbes historiques de toute l'expérimentation.

Les moyens de mesure de la conductivité ou de constante diélectrique peuvent alors comporter:
- plusieurs moyens de contrôle de l'impédance, les électrodes étant reliées à un système de connecteurs rotatif changeant séquentiellement la polarité reliée aux électrodes de façon à mesurer deux impédances.

Dans un second mode de réalisation, l'invention concerne un appareil automatisé pour la mise en oeuvre de ce procédé, dans une cellule de brassage comprenant :
- une cuve,
- une pale de brassage
- un moyen d'injection ou de prélèvement de fluide,
- des moyens d'observations microscopique et de mesure de diffusion, le réglage de l'épaisseur de l'échantillon étant réalisé par la descente automatique de la pale de brassage grâce au monte et baisse, le système se repositionnant en rotation après les observations,
- des moyens de mesure de la viscosité, de température, de la conductivité,
et plusieurs sondes, positionnables en plusieurs points de la cuve et notamment à différentes hauteurs, comportant : des électrodes et plusieurs moyens de mesure d'impédance,
- tous ces moyens étant commandés et les résultats étant acquis stockés et affichés par des moyens informatiques,
- tous ces moyens étant combinés et gérés par un logiciel et appliqués à une cellule de brassage, fournissant à l'opérateur un tableau de bord de l'évolution des caractéristiques dudit fluide dans une simulation de processus de fabrication,
- des mesures de la conductivité ou de la constance diélectrique étant réalisées en plusieurs endroits ou hauteurs de la cuve,
permettant ainsi :
- d'établir des corrélations entre l'évolution de paramètres physiques, l'observation des phénomènes macroscopiques et des mesures significatives lors d'une simulation de processus industriel,
- d'analyser l'homogénéisation ou la déstabilisation d'un fluide complexe au cours d'un processus de fabrication.

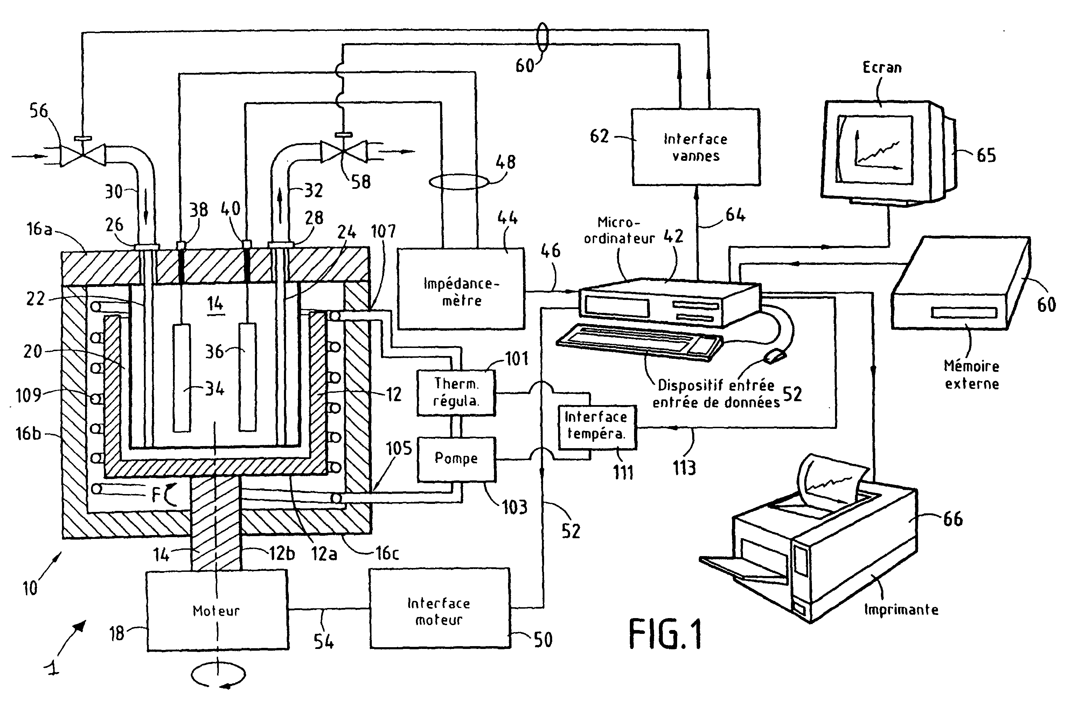

La présente invention sera mieux comprise et ses avantages ressortiront plus clairement à la lecture de la description qui suit d'un premier mode de réalisation, donné purement à titre d'exemple en référence aux dessins qui l'accompagnent, dans lesquels- la figure 1 est une vue schématique de l'appareil 1 de mesure automatisée conforme à la présente invention,
- la figure 2A est une vue schématique en coupe d'une cellule d'écoulement par cisaillement permettant une mesure de l'impédance ou de la constante diélectrique d'un fluide dans la direction de la vitesse d'écoulement ;
- la figure 2B est une vue schématique en plan de la cellule selon l'axe IIB de la figure 2A,
la figure 3A est une vue schématique en coupe d'une cellule d'écoulement par cisaillement permettant une mesure de l'impédance ou de la constante diélectrique d'un fluide dans le sens du cisaillement du fluide,
- la figure 3B est une vue schématique en plan de la cellule selon l'axe IIIB de la figure 3A,
la figure 4 est une vue schématique en coupe d'une cellule d'écoulement par cisaillement permettant une mesure d'impédance ou de la constante diélectrique d'un fluide dans le sens du vortex,
La figure 4A est une vue schématique en coupe d'une cellule d'écoulement par cisaillement permettant une mesure de l'impédance ou de la constante diélectrique d'un même échantillon de fluide dans trois directions différentes (dans la direction de la vitesse d'écoulement, dans la direction du vortex, dans la direction du gradient de vitesse) et de façon séquentielle.
la figure 5 est une courbe montrant la conductivité en fonction du cisaillement d'un fluide subissant une transition isotrope anisotrope, la conductivité étant mesurée dans la direction de cisaillement, dans la direction de la vitesse du fluide et dans le sens du vortex,
- la figure 6 est un schéma montrant l'orientation sous cisaillement dans un fluide présentant une phase lamellaire,
- la figure 7 est un schéma montrant une transition isotrope-anisotrope de la structure d'un fluide sous écoulement avec cisaillement,
- la figure 8 est une courbe montrant l'évolution en fonction du temps de la conductivité d'un fluide dans la direction de la vitesse d'écoulement dans le cas d'un changement abrupt du taux de cisaillement, mettant en évidence une phase de vésicules multilamellaires,
- la figure 9 est une courbe montrant l'évolution de la conductivité d'un fluide sous forme d'émulsion en fonction du temps pour un taux de cisaillement donné,
- la figure 10 est une courbe de l'évolution de la conductivité d'un fluide en fonction du temps après cessation de cisaillement, reflétant le temps de stabilisation d'une phase multilamellaire engendrée par cisaillement,
- la figure 11 est une courbe de l'évolution en fonction du temps de la conductivité d'un fluide contenant une poudre en dissolution, sous un taux de cisaillement donné, et
- la figure 12 est une courbe de l'évolution de la conductivité d'une émulsion en fonction du temps lors d'une augmentation abrupte de taux de cisaillement.

La figure 1 montre de manière schématique un appareil 1 de mesure automatisé permettant d'analyser des caractéristiques électriques. telles que l'impédance ou la constante diélectrique, d'un fluide sous l'effet de l'écoulement avec cisaillement.

Les mesures sont effectuées au sein d'une cellule 10 dite cellule de Couette, spécialement conçue pour provoquer de manière contrôlée un état d'écoulement dans un fluide avec cisaillement. Cette cellule 10, qui est généralement cylindrique, est représentée sur la figure en coupe suivant son axe principal.

La cellule 10 se décompose en une partie mobile 12, dite rotor, et une partie fixe 14, dite stator, toutes deux intégrées à un bâti comprenant un plateau supérieur 16a, une paroi cylindrique. 16b et une base 16c.

Le rotor se présente sous la forme d'une coupelle 12 dont la base 12a est prolongée à sa partie inférieure par un axe central 12b. Cet axe 12b traverse la base 16c du bâti et est relié à un moteur 18 assurant la rotation de la coupelle 12.

Le stator se présente sous la forme d'un manchon cylindrique 14 dépendant du plateau supérieur 16a du bâti de façon à être projeté dans la coupelle 12. La surface extérieure du manchon 14 et la surface intérieure de la coupelle 12 définissent un espace annulaire étroit 20 (dit espace de vortex). Le fluide soumis à la mesure est retenu dans cet espace afin d'être soumis à un vortex provoqué par la rotation de la coupelle 12 relativement au manchon 14. Le taux de cisaillement du fluide est une fonction directe du taux de rotation de la coupelle 12. On notera que le taux de cisaillement peut être défini soit en rapport avec la vitesse de rotation du rotor 12, soit en fonction du couple appliqué au rotor.

Conformément à un aspect optionnel avantageux de la présente invention, la cellule 10 est équipée de moyens permettant d'introduire le fluide dans l'espace de vortex 20 et de l'extraire de cet espace depuis l'extérieur. Dans l'exemple représenté, ces moyens sont des conduits respectifs 22, 24 pour l'introduction et l'extraction de fluide. Chaque conduit 22, 24 communique avec l'espace de vortex 20 au niveau inférieur du manchon 14 et débouche à l'extérieur du plateau supérieur 16a. Ces conduits 22, 24 peuvent être constitués simplement par des perforations respectives dans le manchon 14. Des raccords 26. 28 sont prévus sur le plateau supérieur 16a pour permettre de relier les conduits 22, 24 à des conduits extérieurs respectifs 30, 32 d'admission et d'extraction de fluide. Le conduit d'extraction 32 peut être relié à une source d'aspiration.

Dans des variantes de réalisation, les conduits 30 et 32 peuvent être reliés au système de brasseur de gros volume, afin de réaliser le pilotage du brasseur via les résultats mesurés par l'appareil 1. A titre d'exemple, si la conductivité du fluide issu de la phase de brassage n'évolue plus le micro-ordinateur 42 de l'appareil 1 peut commander l'arrêt de la phase de brassage.

Les raccords 26, 28 peuvent être réalisés de façon à permettre une connexion et une déconnexion rapide et automatisée d'une cellule.

Les raccords 26, 28 peuvent être prévus pour sceller automatiquement la cellule 10 de l'environnement extérieur lorsque celle-ci est déconnectée de l'appareil, de manière à préserver les conditions initialement fixées au sein de l'espace de vortex 20.

Dans l'exemple illustré, la cellule 10 est prévue pour des mesures de caractéristiques électriques du fluide dans l'espace de vortex 20, et plus particulièrement des mesures de l'impédance du fluide dans la direction de la vitesse de l'écoulement, c'est-à-dire dans le sens de la rotation du rotor 12 (flèche F). Pour ce faire, une paire d'électrodes 34, 36 est prévue à la surface du manchon 14. Chacune des électrodes 34, 36 est constituée par une bande métallisée alignée parallèlement avec l'axe principal du manchon 14 et reliée électriquement à des connecteurs respectifs 38, 40 sur le plateau supérieur 16a.

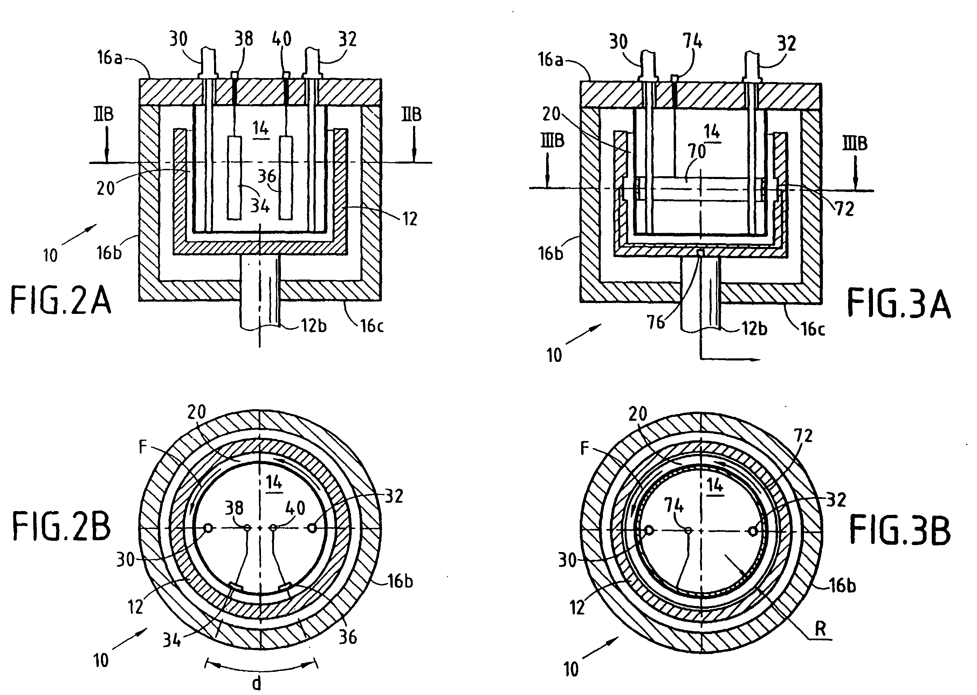

La géométrie de la cellule 10 au niveau des électrodes 34 et 36 et des surfaces de contact avec le fluide par le manchon 14 et la coupelle 12 peut être comprise plus aisément par référence à la figure 2B, qui est une vue en coupe selon l'axe IIB de la figure 2A, cette dernière reprenant la vue de la cellule 10 représentée à la figure 1.

On notera que les dimensions des électrodes 34.36 et leur espacement d autour de la circonférence du manchon 14 sont étalonnés pour permettre un calcul de l'impédance ou de la conductivité du fluide soumis à la mesure.

L'appareil selon l'invention permet de commander l'ensemble des conditions de mesure au sein de la cellule 10 grâce à un micro-ordinateur programmé 42.

A cette fin, le micro-ordinateur 42 est fonctionnellement relié à un impédancemètre 44, à commande numérique au moyen d'un bus de données 46. L'impédancemètre 44 est branché par un câblage 48 sur les deux électrodes 34, 36 de manière à pouvoir recueillir et enregistrer des valeurs d'impédance entre ces électrodes à des intervalles déterminés. L'impédancemètre 44 délivre aux électrodes 34 et 36 des tensions en courant direct ou en courant alternatif. Dans ce dernier cas, la fréquence du courant peut être programmée à partir du micro-ordinateur 42 via le bus 46 sur une plage allant de quelques Hz à plusieurs dizaines de kHz. L'impédance entre les électrodes 34, 36 est calculée et enregistrée par le micro-ordinateur 42 pour une fréquence donnée.

Le micro-ordinateur 42 est également fonctionnellement relié au moteur 18 via un circuit d'interface 50 de manière à commander la mise en rotation et l'arrêt du rotor 12, ainsi que la vitesse de rotation ou le couple d'entraînement et les variations de vitesse ou de couple de ce dernier selon un programme de mesure. De manière classique, l'interface 46 comprend une entrée de données reliée par un bus 52 au micro-ordinateur 42 afin de recevoir des commandes selon un protocole établi. Ces commandes sont converties en signaux d'attaque qui sont transmis par un câblage 54 vers le moteur 18. A titre d'exemple, le moteur 18 peut être du type pas-à-pas, auquel cas l'interface transmet des commandes d'impulsions et de direction qui déterminent respectivement la vitesse ou le couple et le sens de rotation.

Dans l'exemple représenté, le micro-ordinateur 42 commande également l'arrivée et la sortie du fluide soumis à la mesure grâce à une paire d'électrovannes 56, 58, dans les conduits externes respectifs 30, 32. Ces électrovannes 56, 58 sont reliées par un câblage 60 à une interface 62, elle-même reliée au micro-ordinateur 42 par un bus 64. Les commandes d'ouverture et fermeture des électrovannes 56, 58 sont émises sur le bus 64 en fonction du déroulement du programme de mesure. Cette disposition permet notamment de charger l'espace de vortex 20 de la cellule 10 avec une quantité déterminée de fluide en actionnant l'électrovanne 56 du conduit d'arrivée 30 en début de mesure, ensuite de vider cet espace en actionnant l'électrovanne 58 du conduit de sortie 32 et d'introduire une nouvelle charge de fluide en actionnant de nouveau l'électrovanne 56 du conduit d'arrivée 30, le tout étant effectué selon un programme établi. Ce dispositif permet de réaliser des prélèvements et réinjections dans un malaxeur et dans ce cas les mesures recueillies permettent de piloter les moyens de mise en oeuvre du brassage, (notamment les moyens de brassage, d'injection et de régulation de température par les interfaces 50, 111, 62 de l'appareil).

Les opérations de connexion et de déconnexion des conduits 30, 32 peuvent être automatisées par des moyens électromécaniques commandés par le micro-ordinateur 42 afin de suivre un programme de mesures sur plusieurs cellules différentes en séquence. Cette disposition permet notamment d'introduire différentes composantes d'un fluide à des moments déterminés par des conduits respectifs (non représentées) alors même que la cellule 10 est en fonctionnement pour créer un cisaillement. Dans ce cas, il est possible de prévoir des raccordements multiples permettant l'accès à la cellule aux différentes composantes.

Dans l'exemple, l'appareil 1 comprend également un moyen permettant de contrôler la température du fluide au sein de la cellule de mesure 10. Ce moyen est réalisé par un système de circulation d'un fluide caloporteur (par exemple de l'eau) comprenant un dispositif thermorégulateur 101 et une pompe 103 reliés en circuit fermé par un port d'admission 105 et un port de sortie 107 de la cellule de mesure 10 à un conduit de circulation 109 au sein de la cellule. Ce conduit se présente sous forme d'un serpentin qui entoure le rotor (coupelle 12) de manière à assurer un bon échange thermique avec le fluide dans l'espace de vortex 20.

Le thermorégulateur et la pompe 103 sont commandés par le micro- ordinateur 42 via une interface de commande de température 111 et un bus de transmission de données de température 113.

Le thermorégulateur 101 et la pompe 103 peuvent être commandés par programme pour maintenir une température fixe ou pour établir un réchauffement ou un refroidissement à taux prédéterminé grâce à des moyens de contrôle thermostatiques connus en eux mêmes. A cette fin, le thermorégulateur peut être équipé de moyens chauffants et réfrigérants.

Cette disposition permet de mesurer des paramètres d'un fluide sur des périodes relativement longues tout en s'assurant que la température restera une donnée constante ou une variable maîtrisée.

D'autres réalisations du moyen thermorégulateur sont possibles. Le conduit de circulation peut, par exemple, être logé dans la partie de la cellule 10 formant le stator 14.

De même il est possible d'envisager un dispositif à effet Peltier logé dans une partie de la cellule en contact thermique avec le fluide sous mesure, relié à une unité de contrôle thermostatique, le tout étant commandé par le micro-ordinateur 42 selon des techniques connues.

Le programme de mesures peut être chargé dans le micro-ordinateur 42 à partir d'une mémoire interne ou d'une mémoire externe 60, ou encore par un dispositif d'entrée de données 62 tel qu'un clavier ou une souris. Le dispositif d'entrée de données 62 peut notamment servir pour modifier le déroulement du programme de mesures préenregistré ou de choisir des paramètres tels que la durée des mesures, le taux de cisaillement (par la vitesse de rotation) ou le taux de contrainte de cisaillement (par le couple du moteur 18), la fréquence du courant utilisé pour des mesures d'impédance, les flux de fluide par les électrovannes 56, 58 etc.

Conformément à la présente invention, le micro-ordinateur 42 est programmé pour emmagasiner les données mesurées depuis la cellule 10 (dans ce cas l'impédance) et les mettre en corrélation avec d'autres paramètres, tels que le taux de cisaillement ou la contrainte de cisaillement et le temps écoulé à partir d'un point de référence.

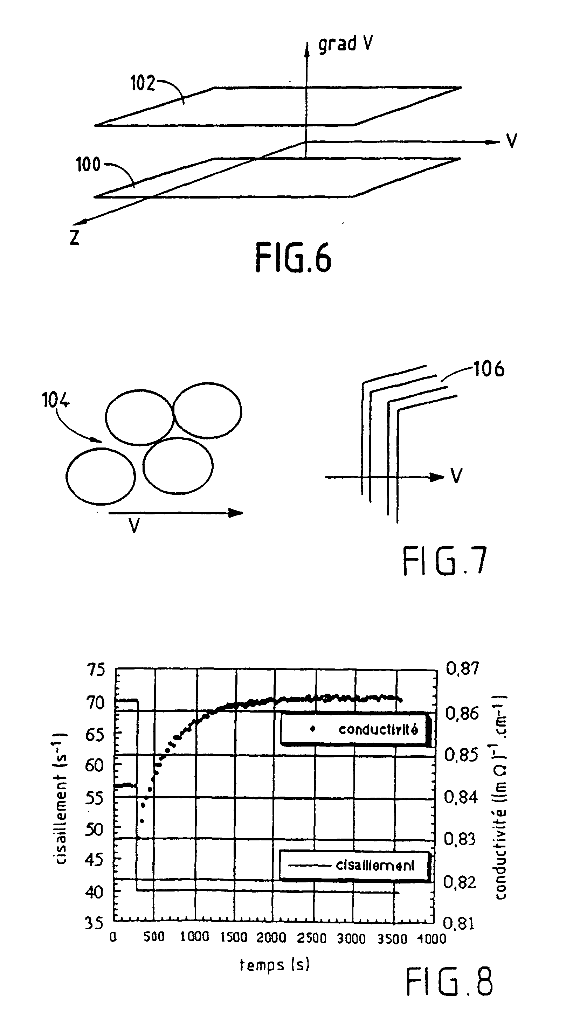

Le micro-ordinateur 42 produit une indication de cette corrélation sous diverses formes. Dans le mode de réalisation de la figure 1, cette corrélation est exprimée de manière graphique sur un écran 65 et sur une sortie d'imprimante 66. Plusieurs exemples de ces représentations graphiques obtenues conformément à l'invention seront décrits et commentés en détail plus loin par référence aux figures 5 à 11.

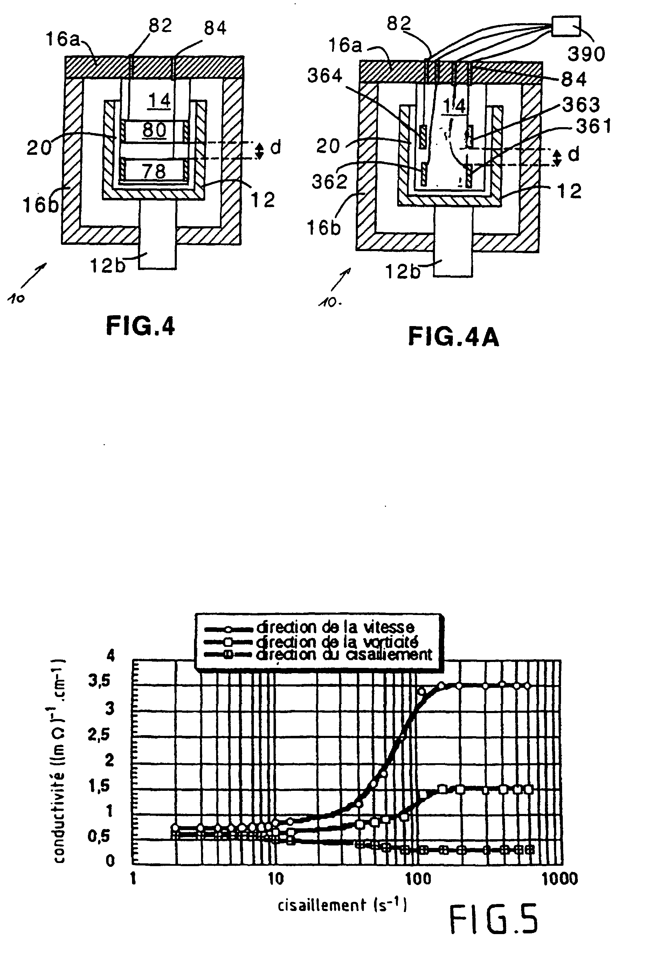

Les figures 3A, 3B et 4 et 4A montrent des variantes de cellules de mesure 10 adaptées à la mesure de l'impédance du fluide dans d'autres sens vis-à-vis de l'écoulement. Ces cellules sont identiques à celle présentée par référence aux figures 1, 2A et 2B en ce qui concerne leur construction générale et la création du cisaillement dans le fluide. Les éléments communs de toutes ces cellules sont identifiés par les mêmes repères et ne seront donc pas décrits à nouveau par souci de concision.

Les figures 3A et 3B représentent, respectivement en coupe axiale et en plan selon l'axe IIIB de cette coupe, une cellule adaptée pour mesurer l'impédance entre les surfaces du rotor 12 et du stator 14 en contact avec le fluide, c'est-à-dire à travers l'épaisseur du fluide dans l'espace de vortex 20. Cette mesure exprime donc l'impédance du fluide dans le sens du cisaillement ou dans le sens du gradient de la vitesse (Grad V).

A cet effet, la cellule 10 comporte une première électrode 70 dépendante du stator 14 et une deuxième électrode 72 dépendante du rotor 12. Dans l'exemple, la première électrode 70 se présente sous forme de bague métallisée disposée sur la circonférence du stator 14. La deuxième électrode 72 se présente également sous forme de bague métallisée concentrique à la première électrode. Elle est disposée dans une gorge ménagée à la surface interne de la coupelle 12 formant le rotor. Les première et deuxième électrodes 70, 72 présentent une aire de contact avec le fluide dimensionnée pour permettre une mesure adaptée de l'impédance.

La connexion à la première électrode 70 est établie par un connecteur 74 sur le plateau supérieur 16a de la cellule, comme dans l'exemple de la figure 1. La connexion à la deuxième électrode est établie par un contacteur tournant 76 prévu à l'axe de rotation, permettant une liaison entre cette électrode et un point statique en dehors de la cellule 10. Une telle technique de contact est connue en elle-même et peut être mise en oeuvre avantageusement par un contacteur à mercure.

La figure 4 représente en coupé axiale une cellule adaptée pour mesurer l'impédance dans le sens de l'axe principal de l'espace de vortex 20, c'est-à-dire dans la direction de la vorticité. Les électrodes se présentent sous la forme de deux bagues métallisées 78, 80 sur la circonférence du stator (14), décalées l'une de l'autre par une distance d prédéterminée pour permettre une mesure adaptée de l'impédance du fluide.

La connexion aux deux électrodes 78, 80 est établie par deux connecteurs externes 82, 84 sur le plateau supérieur 16a, comme pour le cas de la cellule représentée à la figure 1

Dans une autre variante de réalisation le stator peut comporter au moins 4 électrodes qui peuvent être ponctuelles 361,362,363,364, représentés sur la figure 4A, disposés de façon adéquate à la surface du stator, reliées à un contacteur rotatif 390 qui lui est relié à un impédancemètre 44 et le rotor comporte une ou plusieurs électrodes annulaires 365 ou ponctuelles en vis à vis avec les électrodes 361, 362, 363, 364, positionnées de façon adéquate et reliées au contact tournant 76 qui est relié contacteur rotatif 390 (ou sélecteur de polarité séquentielle dont le fonctionnement est connu) de façon à mesurer l'impédance du fluide de façon séquentielle dans différentes directions vis à vis de la direction de la vitesse d'écoulement en fonction de la polarité des différentes électrodes. Ce système permet de caractériser l'anisotrope sous cisaillement sur le même échantillon en cours de cisaillement.

L'appareil de mesure automatisé conforme à la présente invention peut ainsi effectuer des mesures avec toutes les cellules décrites par référence aux figures 2 à 4 par simple interconnexion. Il est bien entendu que l'appareil peut être adapté aisément pour effectuer des mesures simultanément sur plusieurs cellules, chacune étant commandée indépendamment en ce qui concerne le taux de cisaillement, le remplissage et le vidage de l'espace de vortex et la saisie de données.

A titre d'exemple, l'appareil de mesure automatisé selon la présente invention peut commander les trois types de cellules décrites par référence aux figures 2 à 4 afin de mesurer l'impédance d'un fluide dans les trois sens, respectivement dans la direction de la vitesse, du cisaillement et de la vorticité. Dans une telle configuration, il est possible de commander les cellules en phase et selon les mêmes conditions de cisaillement et d'acquisitions de données afin de permettre une comparaison évolutive dans le temps des paramètres. L'appareil peut ainsi tracer l'apparition ou une évolution d'une anisotropie dans la conductivité mesurée dans deux ou trois sens différents en reproduisant une courbe telle que représentée à la figure 7.

Dans l'exemple représenté, l'appareil est prévu pour déterminer l'impédance du fluide. Il est évident qu'à partir de ce paramètre on peut déterminer aussi la conductivité ou la constante diélectrique du fluide sur la base de correspondances élémentaires.

On remarquera que l'appareil de mesure automatisé peut également fonctionner avec d'autres types de cellules de cisaillement pour analyser divers autres paramètres, tels que la réponse d'un fluide au rayonnement (optique, photons X, neutrons), ou aux ondes élastiques
(acoustiques, ultrasons, infrasons), etc.
Grâce à l'automatisation des mesures autorisée par l'appareil selon la présente invention, il est possible de suivre en continu l'évolution d'un fluide à divers stades de son élaboration. L'appareil peut par exemple être mis en oeuvre dans un site de production industrielle d'un fluide complexe (crème, composition alimentaire, détergent, etc.) où on effectue un brassage de composants dans une cuve ou analogue. Les cellules de cisaillement peuvent être reliées sur leurs conduits d'admission et d'évacuation 30, 32 respectivement au système d'alimentation et d'évacuation de la cuve et programmées pour réaliser un taux de cisaillement en correspondance avec celui créé par le brassage. Les informations recueillies concernant l'évolution des paramètres (par exemple l'anisotropie de l'impédance, une variation ou une stabilisation de l'impédance dans un sens choisi) peuvent alors permettre d'intervenir sur les conditions de brassage afin d'assurer une optimisation de cette opération en ce qui concerne la durée, la vitesse, etc.
Le micro-ordinateur 42 peut également calculer des propriétés du fluide à partir des données de me sure recueillies et de leur évolution en fonction d'un taux de cisaillement et/ou du temps écoulé. A partir de ces propriétés, le micro-ordinateur peut piloter le déroulement d'un processus de fabrication, par exemple afin de respecter un cahier des charges, via des sorties de commandes (non représentées).

On décrira maintenant à l'aide d'exemples, comment il est possible d'obtenir les mesures de caractéristiques électriques de divers fluides et des informations qui peuvent en être déduites à un niveau macroscopique. Des informations importantes des propriétés macroscopiques d'un fluide sont obtenues par l'étude de l'anisotropie des caractéristiques électriques d'un fluide sous écoulement avec cisaillement.

Pour les matériaux complexes (matériaux possédant une structure microscopique grande devant la taille moyenne des molécules), la mesure diélectrique est une sonde très précise et très sensible à la microstructure (la conductivité macroscopique est sensible à la porosité et à la tortuosité microscopique du matériau). Un changement global de la microstructure produit un effet sur la conductivité macroscopique du matériau. La mesure diélectrique en fonction du temps, d'un matériau sous écoulement permet de mesurer le temps de variation de la structure interne du matériau pour atteindre son régime stationnaire (régime d'écoulement où la microstructure ne varie plus dans le temps). Ce temps de variation est reporté par la suite en fonction du taux de cisaillement (ou de la variation du taux de cisaillement ou de la contrainte de cisaillement) produit. Il permet d'optimiser ou de contrôler la fabrication en fonction du taux de cisaillement produit.

Si l'échantillon est déjà mélangé dans la cellule de mesure, la mesure diélectrique va mettre en évidence le changement de structure interne à concentration constante des différents constituants du fluide. Le temps de variation pour atteindre le régime stationnaire est le temps que met l'échantillon depuis le changement de régime d'écoulement jusqu'à l'obtention d'une conductivité ou une constante diélectrique n'évoluant plus dans le temps (plateau de conductivité).

Selon la présente invention, il est également possible d'effectuer le mélange des différents constituants du matériau dans la cellule de mesure

Cette opération est possible car la cellule de mesure selon la présente invention peut, dans un mode de réalisation préféré, posséder des moyens qui permettent d'introduire des matériaux dans l'espace de vortex alors même que la cellule est activée.

Si le mélange consiste à disperser des particules non solubles dans un fluide sous écoulement, le temps de variation pour atteindre le régime stationnaire est le temps qui va caractériser le temps de dispersion pour des particules.

Si le mélange consiste à dissoudre des particules solubles dans un fluide sous écoulement, le temps de variation pour atteindre le régime stationnaire est le temps qui va caractériser le temps de dissolution des particules.

Si le mélange consiste à produire une nouvelle structure (un nouveau matériau) avec différents constituants fluides ou solides (exemple de la mayonnaise), le temps de variation pour atteindre le régime stationnaire est le temps qui va caractériser le temps pour générer cette structure.

On mesure la conductivité en fonction du temps avec, comme temps d'origine, le changement de régime d'écoulement du fluide s'il est déjà constitué, ou le début du mélange des différents constituants du fluide dans le cas contraire.

Dans une application industrielle, la mesure de la variation temporelle de la conductivité peut être utilisée comme procédé de contrôle de la qualité.

En effet, les industriels qui travaillent dans les domaines des fluides complexes (cosmétique, peintures, bitumes, pâtes, agroalimentaire, pétrochimie, pharmacie) rencontrent de nombreux problèmes de contrôle de la qualité de leur production.

Aussi, un progrès dans la maîtrise de l'élaboration des matériaux nouveaux passe par le contrôle des procédés de fabrication industrielle et de la qualité des produits. Les fluides complexes sont issus d'un mélange de formules comprenant une variété importante de composés différents. Au niveau de la production, il y a là une phase essentielle du malaxage qui a pour but soit de former la structure (exemple de la mayonnaise), soit de disperser un milieu dans un autre. Ce malaxage peut être réalisé avec des appareils très divers. Un des paramètres qui restent pertinents au niveau des mélangeurs est le taux de cisaillement moyen qu'ils font subir au fluide.

Au niveau des transports et du pompage des fluides, les écoulements peuvent provoquer des instabilités dommageables qui peuvent conduire à des démixtions du mélange, des changements de viscosité ou de la sédimentation des particules. La connaissance de ces variations de structure peut permettre de résoudre ces problèmes.

Au niveau de la qualité, la structure des matériaux reste importante. L'onctuosité et le goût d'une mayonnaise, par exemple, dépendent de la taille des gouttes microscopiques qui la constituent. La taille de ces gouttes dépend du taux de cisaillement lors du mélange. Le temps de dissolution d'une poudre de lessive dans une machine dépend du taux de cisaillement qui lui est appliqué. La mesure diélectrique en fonction du temps et du taux de cisaillement permet d'améliorer la qualité des produits industriels.

L'invention permet d'obtenir des mesures simples, reproductibles, caractérisant un phénomène se produisant à L'échelle microscopique pour les fluides ayant une viscosité proche de celle de l'eau et donc inaccessible par des mesures rhéologiques. Cette technique s'est révélée très précise, par exemple, dans le cas de la mesure du temps de dissolution en fonction du taux de cisaillement des poudres dans un solvant (exemple de la poudre de lessive dans de l'eau).

Cette mesure peut être facilement transposable à l'industrie car sa mise en oeuvre ne nécessite pas de connaissances scientifiques pointues. Une fois les mesures effectuées sur la cellule de cisaillement, il est facile de placer les électrodes sur une ligne de fabrication industrielle et de contrôler en direct l'état de la production.

Du fait des possibilités de mesure des temps de transformation des matériaux et des possibilités de caractérisation structurelle, la présente invention est susceptible de favoriser la recherche sur de nouveaux matériaux et de diminuer le coût de fabrication pour de nombreux produits industriels.

Ce moyen de mesure peut donc permettre, d'une part, de faire progresser plus rapidement la recherche et, d'autre part, d'augmenter fortement la compétitivité des entreprises.

Pour un matériau ayant une structure microscopique isotrope, la conductivité de celui-ci ne dépend pas de la direction des lignes du champ électrique appliqué lors de la mesure. Un matériau anisotrope présente des conductivités qui dépendent de l'orientation des lignes de champs. La présente invention offre la possibilité de mesurer la conductivité de l'échantillon dans les trois directions propres d'un écoulement avec cisaillement, à savoir -
- la direction perpendiculaire au taux de cisaillement,
- la direction parallèle au taux de cisaillement,
- la direction de la vorticité (dans le cas des écoulements de Couette).

Pour chaque direction de l'écoulement, on mesure la conductivité de l'échantillon en fonction du taux de cisaillement.

La mesure de l'anisotropie de la conductivité sous écoulement permet de pouvoir mesurer l'anisotropie des matériaux susceptibles d'être répandus par une application générant des écoulements et des cisaillements.

A titre d'exemple, l'application de peinture sur les murs à l'aide de pinceaux génère un cisaillement pouvant générer une anisotropie de la structure de la peinture sur le mur. Connaître cette anisotropie peut permettre de résoudre des problèmes d'étalement de la peinture et assure des conditions optimales pour l'application de celle-ci. Les mêmes problèmes se retrouvent pour les applications de vernis, de colles sur des bandes adhésives, etc.

Un exemple de mesure de l'anisotropie d'un fluide sous écoulement avec cisaillement sera donné par référence aux figures 5 à 7.

La figure 5 représente la mesure de la conductivité pour une phase de tensioactif en solution (phase lamellaire lyotrope) en fonction du taux de cisaillement et pour les trois directions principales de l'écoulement que sont la direction de l'écoulement et les deux directions qui lui sont perpendiculaires. Ces directions sont notées V pour la direction de l'écoulement, Z et grad V pour les deux autres.

Lors d'un effet de cisaillement, il se crée dans le fluide des surfaces de cisaillement 100, 1 02 qui sont sensiblement parallèles dans le plan de la direction V de l'écoulement.

Cette courbe montre que l'évolution de la conductivité tridimensionnelle de la phase dépend du taux de cisaillement. On observe clairement une anisotropie qui s'amplifie avec le taux de cisaillement. La conductivité dans la direction d'écoulement devient très importante avec l'augmentation du taux de cisaillement alors que la conductivité dans la direction grad V décroît.

Cet effet de la conductivité en fonction du taux de cisaillement correspond à un changement de la microstructure du matériau. Comme le montre la Figure 7, celui-ci est sous la forme de vésicules (isotropes) 104 pour un faible taux de cisaillement et sous la forme d'une structure en phase lamellaire orientée (anisotrope) 106 pour un fort taux de cisaillement.

Cet exemple est caractéristique de l'orientation des matériaux anisotropes par l'effet du cisaillement. On caractérise ici parfaitement l'anisotropie par la mesure de la conductivité.

Il sera maintenant décrit procédé de mesure pour déterminer le temps de variation de la structure d'un matériau sous écoulement avec cisaillement.

La courbe de la figure 8 représente la mesure de la conductivité pour une phase de vésicules multilamellaires (particules similaires à des liposomes) en fonction du temps et dans la direction de la vitesse. Ces vésicules sont des produits industriels de micro-encapsulation et le temps de formation ou de changement de taille de ces microcapsules dépend du taux de cisaillement appliqué. Cette courbe montre que lorsqu'on change le taux de cisaillement, la conductivité évolue vers un nouvel état stationnaire. Cet état stationnaire caractérise une nouvelle taille des microcapsules.

Comme le montre cette courbe, cette technique, conforme à la présente invention, permet de mesurer facilement le temps de transît du matériau d'un état stationnaire vers un autre.

L'évolution dans le temps des caractéristiques électriques d'un fluide sous écoulement avec cisaillement à taux constant permet aussi d'obtenir des indications sur les propriétés macroscopiques.

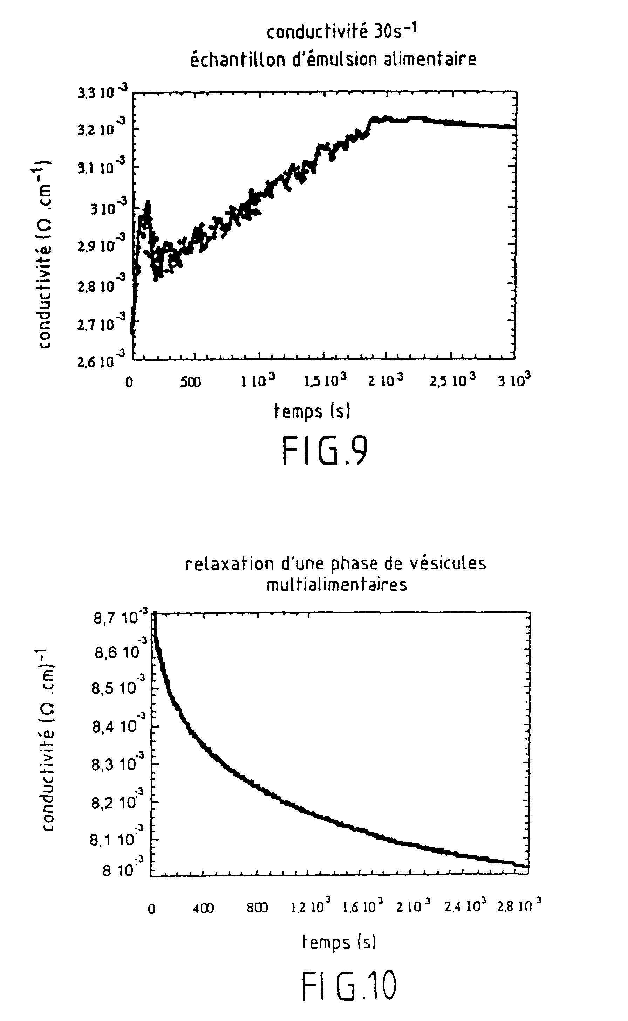

A titre d'exemple, la courbe de la figure 9 montre le temps de déstabilisation d'une émulsion alimentaire (vinaigrette) pour un taux de cisaillement donné. La conductivité augmente jusqu'à un certain niveau qui caractérisé le temps de déstabilisation.

Cet exemple particulier montre l'intérêt que peut avoir l'invention pour le monde agroalimentaire puisqu'elle permet de mesurer des temps de formation, ou de destruction dans le cas présent, des structures par l'écoulement.

La courbe représentée en figure 10 est un exemple de caractérisation d'un matériau issu de la recherche qui fait apparaître une restructuration après arrêt de l'écoulement.

On détermine d'après cette courbe le temps que met une phase de vésicules multilamellaires (liposomes) engendrées par le cisaillement à se stabiliser après l'arrêt de celui-ci.

Cet exemple particulier montre une mesure de temps caractéristique de relaxation d'un matériau après la fin du cisaillement.

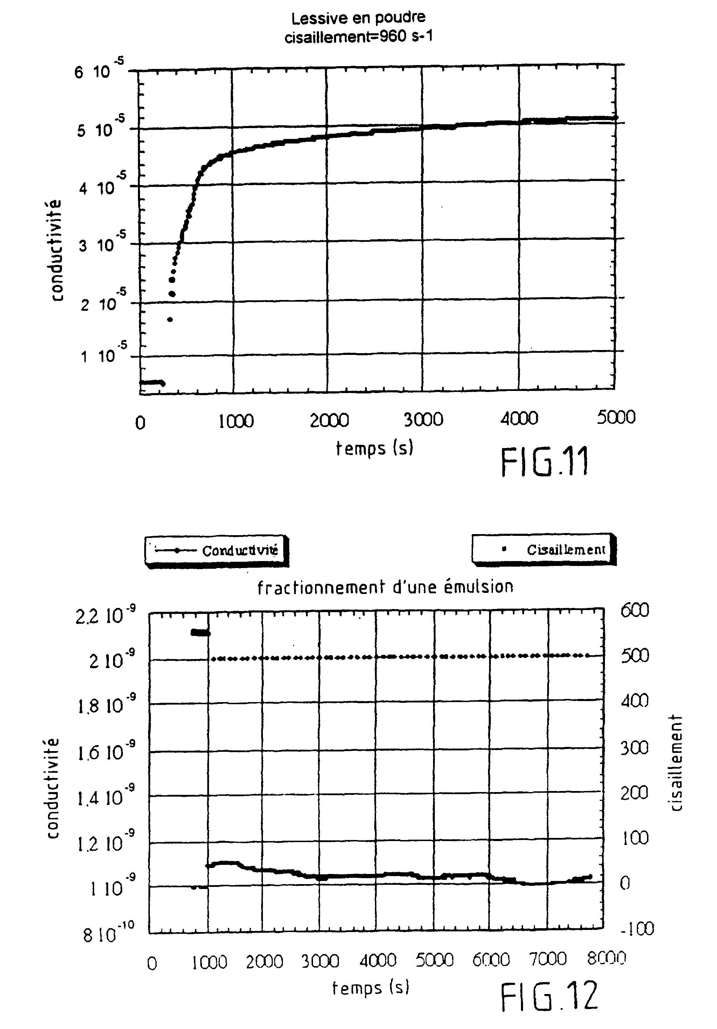

La courbe représentée en figure 11 montre le temps que met une poudre pour machine à laver à se dissoudre dans de l'eau pure sous un cisaillement de 960 s-1. L'introduction de l'échantillon se fait par injection. La conductivité augmente jusqu'à atteindre un plateau qui caractérise la dissolution totale de la poudre.

Un exemple de caractérisation du changement de taille d'une émulsion par effet du cisaillement est représenté par la courbe de la figure 12.

La courbe montre une chute immédiate de la conductivité d'une émulsion huile dans eau lorsque le cisaillement passe de 0 s-1 à 500 s-1. Cette chute de la conductivité correspond à une variation importante de la taille moyenne des gouttes d'huile de l'émulsion. Dans un deuxième mode de réalisation,nous allons décrire un appareil multifonctionnel 2 capable simultanément de piloter et de mesurer les caractéristiques d'un fluide complexe pendant son processus de fabrication.

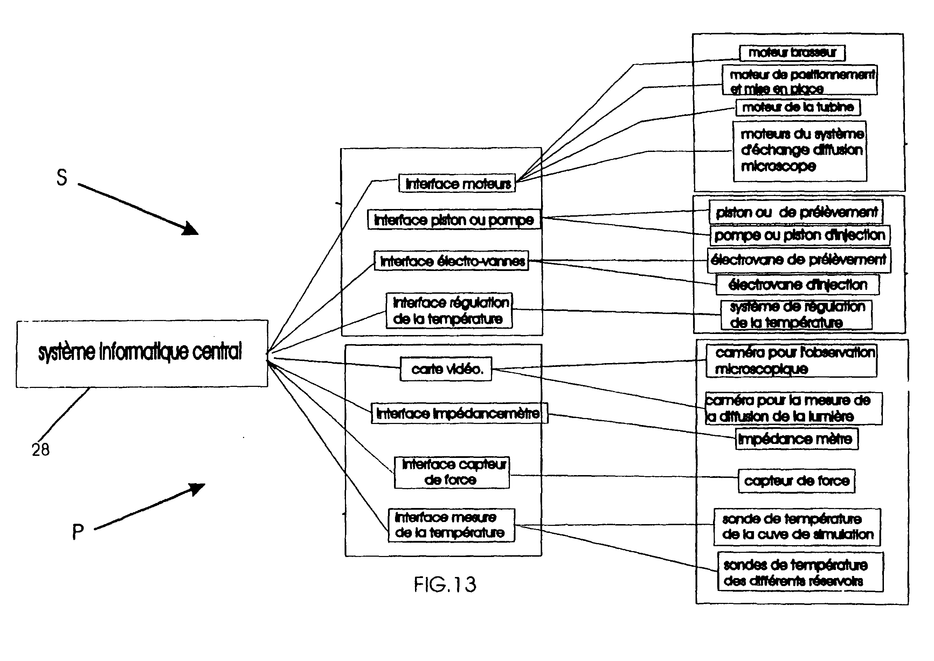

La figure 13 nous montre un synoptique de l'ensemble des moyens mis en oeuvre dans le procédé P

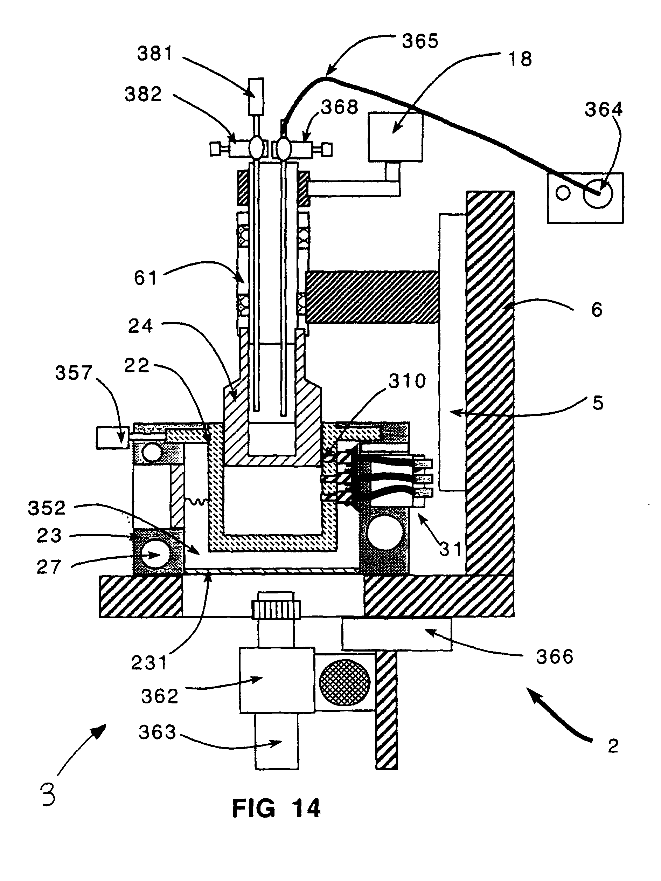

La figure 14 nous montre une vue en coupe de l'appareil multifonctionnel 2.

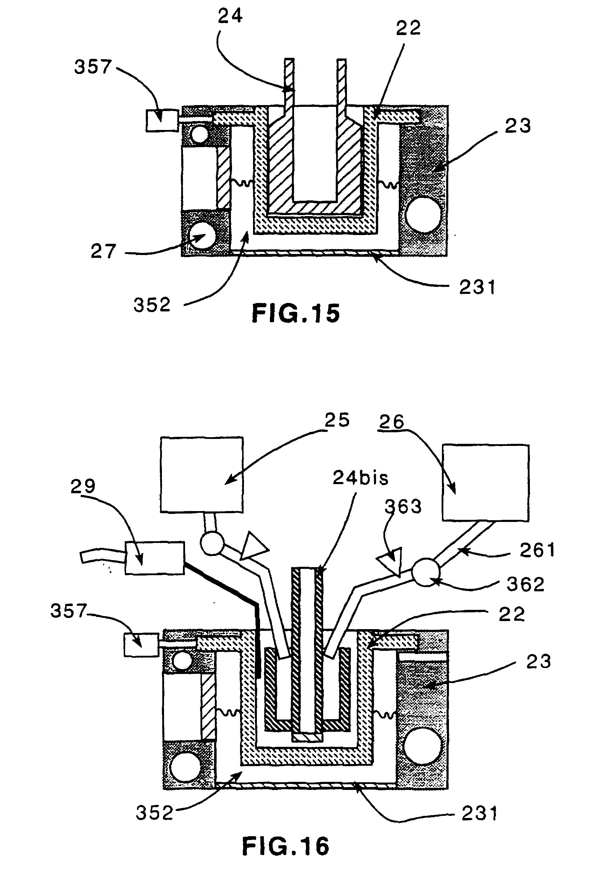

La figure 15 montre les moyens de mis en oeuvre générant le procédé P (cas d'une cellule de "Couette") pour générer des efforts de cisaillement ainsi que certains moyens de contrôle.

La figure 16 nous montre les moyens mis en oeuvre pour générer le procédé, (pale destinée au brassage et systèmes d'injection et de prélèvement.)

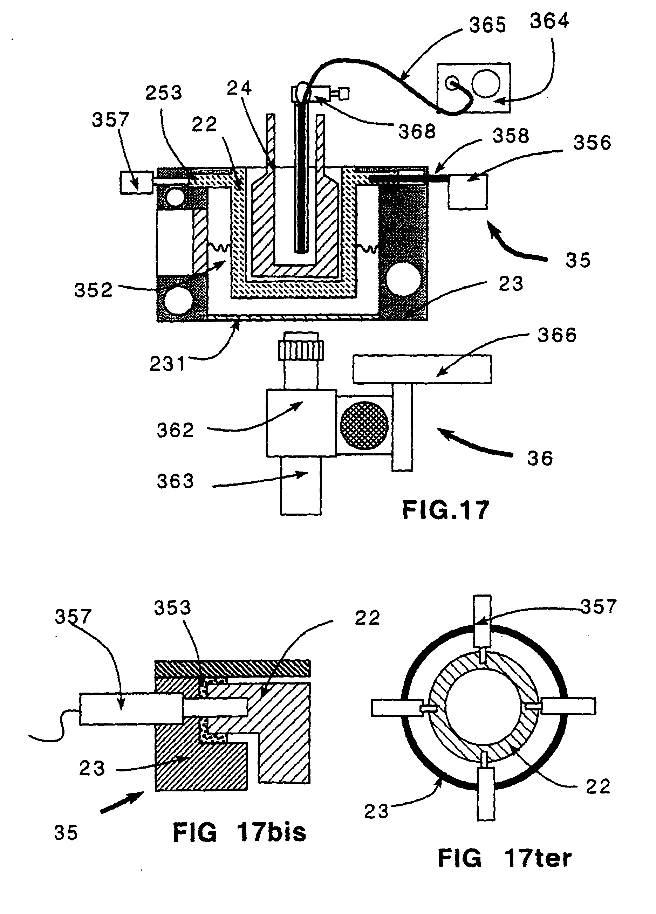

La figure 17 montre les moyens de mesure microscopique, de détermination de la viscosité, et de sustentation

La figure 17bis montre le détail des moyens de sustentation de la cuve recevant le fluide complexe.

La figure 17ter montre le détail des moyens de positionnement de la cuve, soit : un palier lubréifié ou un système de vérins de positionnement

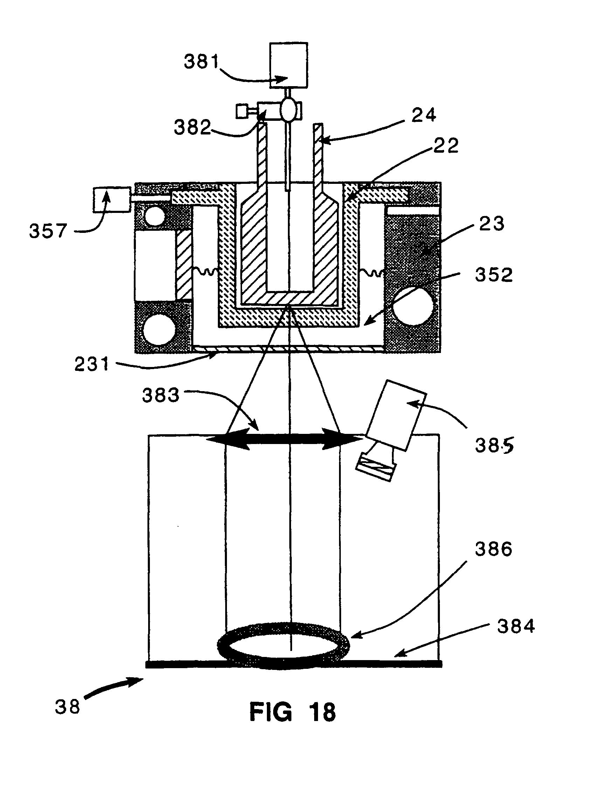

La figure 18 montre les moyens de mesure et d'observation sous émission d'un faisceau laser à travers le fond de la cellule.

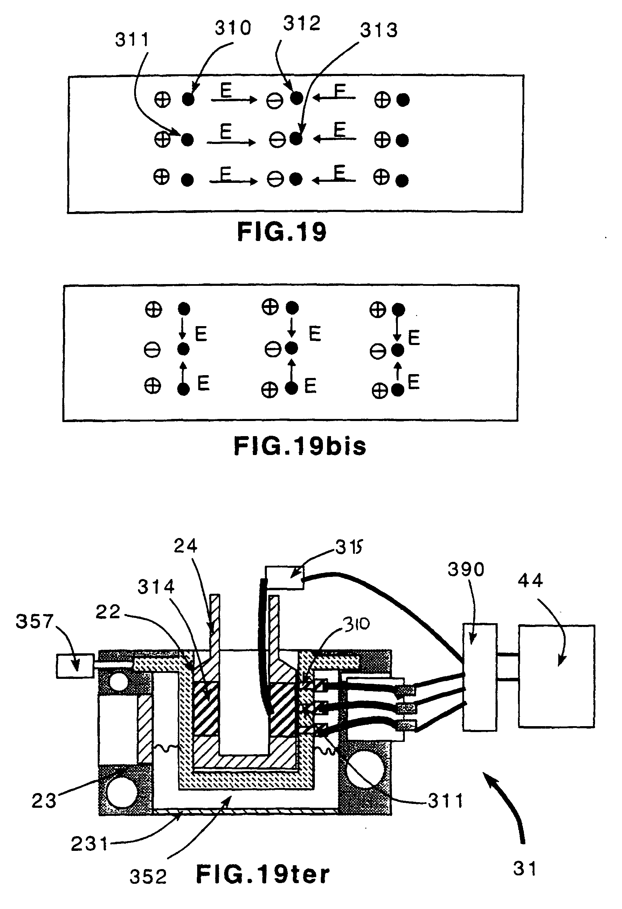

Les figures 19 et 19bis montrent une projection plane de la surface latérale du cylindre qui permet de voir la position des électrodes et l'orientation des champs électriques moyens en fonction de la polarité des électrodes, le stator étant cette fois-çi la cuve.

La figure 19ter montrent les moyens de mesures de la conductivité (vue en coupe de la cellule de couette)

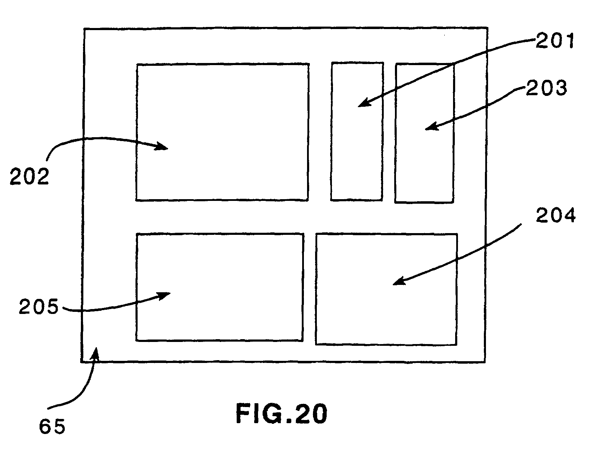

La figure 20 montre une visualisation des mesures et observations sur un écran du système informatique central gérant simultanément l'ensemble du procédé de fabrication du fluide complexe, les mesures et observations instantanées et les courbes historiques

Dans ce deuxiéme mode de réalisation (appareil 2) toutes les fonctions:
Mise en rotation et Pilotage du moteur18 correspondant à l'appareil 1
Contrôle de température
Contrôle du taux de cisaillement
Pilotage des électrovannes et fonction de ces dernières
Pilotage des interfaces
Injection et Extraction de fluides et de leurs composants sont gérées par les mêmes moyens que dans la version de l'appareil 1 ou par des moyens identiques, donc ne sont pas de nouveau décrits dans cette nouvelle version de l'appareil 2 qui, contrairement à la première version prévoit que le stator est le réceptacle du fluide complexe, alors que dans la première version appareil 1, c'est le rotor qui était le réceptacle. Mis à part ces remarques essentielles pour la compréhension de l'invention, les nouveaux moyens mis en place dans cette nouvelle version vont être décrits, ils rendent l'invention plus adaptée à la formulation.

L'intérêt des mesures de conductivité électrique, et l'analyse des variations de cette mesure, pour caractériser un fluide complexe, ont conduit à développer les moyens initialement prévus pour mieux comprendre les variations atypiques (bruit, variations brutales des paramètres, sens de l'évolution de ceux-ci à l'intérieur du fluide...) et à distinguer ainsi les artéfacts des signaux significatifs rendant ainsi ceux-çi directement utilisables pour caractériser l'état du produit et mieux gérer le processus industriel.

Ces moyens ont été développés dans plusieurs voies complémentaires permettant de distinguer les artéfacts des mesures de grandeurs significatives notamment en :
Observant simultanément les variations de mesure de la conductivité électrique dans les 3 axes à plusieurs niveaux de hauteur dans la cuve.
Simulant des conditions d'expérimentation se rapprochant le plus possible des processus industriel.
Cherchant à établir des corrélations entre mesures et observations

Le fluide complexe est suivi dans son évolution, depuis le début de sa mise en oeuvre (soit avant mélange et dés l'adjonction de tous les produits qu'ils soient solides ou liquides) jusqu'au terme de sa fabrication.

Cet ensemble de produits divers est donc placé dans une cuve 22 réceptacle, qui peut être directement le stator de l'appareil ou de la cellule de Couette dans le deuxième mode de réalisation (Appareil 2)

Un Rotor 24 ou une pale 24bis est descendu dans la cuve 2 (fig 14 et 16) par un moyen de positionnement 5 piloté par un système informatique 28 en application direct sur les constituants du fluide complexe; l'appareil multifonctionnel se trouve chargé.
Suite à ce chargement le procédé va pouvoir se dérouler suivant les opérations gérées simultanément par le système 28 pilotant ledit procédé
- Variation de la vitesse de rotation du rotor 24
- Injections des liquides ou gaz placés dans deux réservoirs 25 et 26
- Mise en température de l'appareil 2 par circulation d'eau dans une enceinte torique 27 ou par un système analogue à un radiateur -- - variation possible de cette température
- Récupération du fluide complexe par des systèmes de prélèvement par exemple du type pompes. 29
L'appareil multifonctionnel 2 est fixé sur un chassis 6, il comprend également des moyens de mesures et d'obervation 3 qui se composent:

D'un système de mesure de conductivité sous cisaillement 31 (fig19) cedit système 31 comprend au moins quatre électrodes à pointes 310,311,312,313.. affleurant, par exemple, sur la surface interne de la cuve 22 ou qui peuvent être implantées directement sur le fond de ladite cuve, et sur le rotor. Ces électrodes sont relièes à un système de connecteur rotatif 390 qui change séquentiellement les polarités des électrodes connectées à un impédancemètre 44 (géré par 28) afin que la mesure de conductivité diélectrique s'opère suivant la direction du champ électrique E, dans les différentes directions de l'écoulement, fig 19 et 19 bis les électrodes annulaires 314 du rotor étant reliées à des contacts tournants 315; cette mesure séquentielle permet de mesurer l'anisotropie des échantillons du fluide complexe sous cisaillement en une seule et même expérience.

D'un dispositif de mesure de la viscosité 35 qui comprend par exemple un moyen de sustentation 352 contenu dans l'enceinte 23 qui peut être un liquide approprié (agissant en poussée d'archimède) et d'un dispositif de palier lubrifié 353 qui autorise la mise en rotation de la cuve grâce à la force de viscosité de l'échantillon placé dans la cuve.

Aprés mise en micro-rotation de la cuve 22 par rapport à l'enceinte 23, un capteur 356 (de déplacement, de force, ou de mesure de couple ..) relié à 28 permet de mesurer la force visqueuse résultante appliquée à l'échantillon placé dans ladite cuve, au contact du rotor grâce à une tige 358 fixée sur la cuve.

Le dispositif de mesure de viscosité 35 comprend au moins trois verins 357 .. pilotés par le système informatique 28 permettant de repositionner la cuve grâce à un lubrifiant qui peut être une pâte visqueuse.

De moyens d'obervations microscopiques 36 qui comprennent un microscope 362 équipé d'une caméra 363 toujours pilotée ou gérée par 28 disposant d'un moyen de déplacement 366 pour explorer le fond transparent de la cuve 22 à travers le fond transparent 231 de l'enceinte 23. Le fond de 22 pouvant avoir une forme plate ou conique, l'éclairage du systeme d'observation microscopique étant constitué d'une source lumineuse 364 possèdant un système de positionnement 368 et dont la lumière suit une fibre optique 365 dirigée à travers l'axe creux du rotor 24 ou de la pale 24bis vers le fond transparent de la cuve 22. La forme conique du fond du rotor 24 en contact avec l'échantillon permet de choisir l'épaisseur de l'échantillon et ainsi de l'analyser, même quand il est très diffusant (grande turbidité).

Dans une variante de description du dispositif 36, le rotor 24 ou 24 bis possède un fond réfléchissant, la lumière en contact avec l'échantillon, suit la fibre optique 365, et dans ce cas éclaire le rotor 24,ou la pale 24 bis par dessous la cuve 22 avec le fond transparent 231 de l'enceinte 23

D'un ensemble de moyens de diffusions de la lumière constitués :
Par une source laser 381 dont le faisceau traverse le fond du rotor 24
Par un système optique de collimation 383
Par un écran luminescent 384
Par une caméra 385 filmant le spectre de diffusion optique 386 sur l'écran 384

Il faut noter que dans le cas du brassage par pales rotatives 24bis, l'observation microscopique et de la mesure de diffusion se fait suivant le processus suivant :

La pale s'arrête de tourner, et un système automatique de positionnement 5 fait descendre la pale afin d'obtenir la mesure de diffusion de la lumière ou de l'obervation microscopique, ceci dans le cadre d'une épaisseur três fine d'échantillon (environ 10 microns). Apres cette observation le système se repositionne et reprend sa rotation initiale.

Comme l'indique le synoptique S du procédé P de la figure 13 l'appareil multifonctionnel 2 est piloté et géré en acquisition de mesures par un programme d'ordinateur specifique fonctionnant avec le système informatique 28 (progiciel de gestion et d'acquisition) qui permet de faire fonctionner l'appareil 2 dans sa multifonctionnalité et ceci de manière automatique, ou manuelle.

C'est ainsi que sur un écran 65 (figure 20) peuvent s'afficher simultanément différentes fenêtres:
- une fenêtre de l'ensemble des mesures 201
- une fenêtre des Courbes historiques des résultats 202
- une fenêtre pour les paramêtres de pilotage 203
- des fenêtres pour chaque observation, microscopiques et diffusion de la lumière 204
Le programme permet aussi d'accéder à plusieurs modes de fonctionnements, et l'opérateur peut:
soit :procéder lui même à des programmations de divers procédés et de fréquences d'acquisition de mesures inérantes aux fluides complexes observés soit : lancer un programme d'autorégulation du procédé en fonction du fluide complexe à étudier ou à fabriquer.

Toutes ces possibilités fonctionnelles permettent à un homme de métier utilisateur de caractériser les fluides complexes observés, avec un maximum d'efficacité. L'utilisateur, peut aussi grâce à ce nouveau procédé et surtout en utilisant l'appareil multifonctionnel 2 qui découle du procédé décrit P mettre en évidence et établir des corrélations entre :

D'une part : les mesures électriques
de tailles de grain
de viscosité
de conductibilité électrique
et D'autre part l'homogénéité du milieu, sa texture, sa stabilité, son pouvoir émulsifiant et l'efficacité des différentes géométries de brassage du fluide complexe. Ledit appareil multifonctionnel 2 permet ainsi de caractériser un fluide complexe depuis le début jusqu'a son terme, afin de piloter un procédé industriel de fabrication d'un très grand nombre de fluides.

Outre toutes les fonctions déjà décrites grâce aux moyens physiques mécaniques et informatiques mis en place on peut citer comme autres avantages:
le fait de caractériser les fluides complexes de manière très complète
le fait d'effectuer ces opérations dans un temps d'expérimentation très court, avec de très faciles interprétations de l'ensemble des résultats obtenus
l'appareil est formé de différents modules assemblés donc démontables, permettant un nettoyage et une aseptisation, si nécessaire.

Nous insisterons enfin sur le fait que les deux appareils décrits sont complémentaires, le premier servant essentiellement dans les ateliers de fabrications, le deuxième étant plutôt destiné aux laboratoires car il permet de caractériser les fluides complexes avant leur fabrication industrielle en particulier leurs qualités émulsifiantes, ce qui permettra alors d'optimiser ces processus et de prédire le comportement ultérieur des produits dans leur état métastable .

D'autres modes de réalisation sont possibles, mais ils seront revendiqués en particulier s'ils utilisent les mêmes moyens ou des moyens équivalents pour parvenir à des fonctions voisines ou identiques. En particulier ces modes de réalisation peuvent utiliser des géométries de cisaillement différentes : plan sur plan, cône sur plan, ou en formes d'ellispoïde, par exemple si on voulait les adapter à des types de fluides plus spécifiques.

## Revendications

1. Procédé de caractérisation de fluides complexes, consistant à soumettre lesdits fluides à un cisaillement contrôlé dans une cellule de rhéologie classique ou turbulent dans une cellule de brassage, suivant divers protocoles expérimentaux en faisant varier le taux de cisaillement, la température, des injections de composants, et à observer et mesurer, en fonction de l'évolution desdits paramètres l'évolution :
- de la structure microscopique,
- de la viscosité,
- de la taille des grains,
- des conductivités ou constantes diélectriques, dans plusieurs directions et plusieurs points,
**caractérisé en ce que** :
toutes ces mesures et observations sont réalisées simultanément sur le même échantillon et affichées simultanément sur un même écran, grâce à l'observation microscopique de l'évolution de phénomènes physiques, tels que l'élmulsification, la coalescence, la dilution, la floculation, la décantation..., et il est possible d'établir des corrélations entre :
- d'une part, les mesures électriques de taille de grain, de viscosité, de conductibilité électrique,
- et d'autre part, l'homogénéité du milieu, sa texture, sa stabilité, son pouvoir émulsifiant et l'efficacité des différentes géométries de brassage du fluide complexe, pour piloter et contrôler des processus de fabrication d'émulsions, gels, dilutions, mousses.

2. Appareil automatisé (1) pour la mise en oeuvre du procédé selon la revendication 1 comprenant :
- un moyen de cisaillement contrôlé (10) dans une cellule d'analyse classique de type Couette de Mooney ou Cône-plan,
- un moyen d'observation microscopique sous cisaillement (38), comprenant :
- un microscope avec son système de mise au point (362),
- un système d'éclairage (364, 368) soit direct à travers l'arbre du rotor soit épiscopique, le rotor étant alors réfléchissant,
- une caméra numérique (366) et son électronique d'acquisition et de traitement des images,
- un système de diffusion de la lumière et/ou de contrôle de la turbidité (38) comprenant :
- une source laser (381)
- un système d'écran luminescent (384) et un système optique (383) permettant d'obtenir le spectre de diffusion (386) significatif de la taille des particules,
- une caméra numérique (385) et son électronique d'acquisition et de traitement des images,
- un système (366) de déplacement et de va et vient permettant de faire une mise au point horizontale et de réaliser successivement les observations microscopiques puis la diffusion de la lumière,
- un système automatique (5) de monte et baisse permettant de rapprocher la rotor du stator,
- des moyens de contrôle et de régulation de la température (101 et 102),
- un moyen de mesure de la viscosité (35),
- des moyens de mesure de la conductivité ou de constante diélectrique (31), comportant :
- plusieurs paires d'électrodes (310 à 313) affleurant, sur la surface interne de la cellule d'analyse,
- tous ces moyens étant commandés et les résultats étant acquis stockés et affichés par des moyens informatiques (28, 29, 30, 32, 44 et synoptique S),
la combinaison de ces moyens permettant de réaliser, simultanément en temps réel, sur le même échantillon :
- des observations microscopiques et des mesures de taille ou de turbidité par diffusion de la lumière sur des produits aussi bien translucides que diffusants ou turbides, le rotor étant conique et le microscope et l'appareil de diffusion se déplaçant horizontalement afin de sélectionner l'épaisseur adaptée à une bonne observation,
- des mesures de l'évolution de la viscosité,
- des mesures d'évolution de la conductivité ou de la résistivité moyenne dans deux sens par rapport au sens de cisaillement,
un logiciel spécifique, permettant de gérer simultanément la totalité de ces moyens et d'afficher dans plusieurs fenêtres de l'écran :
- les paramètres physiques et leur évolution au cours de l'expérience sous forme de courbes (fenêtre 203),
- les images fixes ou dynamiques d'observation microscopique (fenêtre 204) et de diffusion de la lumière (fenêtre 205),
- les valeurs instantanées de toutes les mesures (fenêtre 201) et les courbes historiques de toute l'expérimentation (fenêtre 202).

3. Appareil selon la revendication 2, dans lequel les moyens de mesure de la conductivité ou de constante diélectrique (31) comportent :
- plusieurs moyens de contrôle de l'impédance (44), les électrodes étant reliées à un système de connecteurs rotatif (390) changeant séquentiellement la polarité reliée aux électrodes de façon à mesurer deux impédances.

4. Appareil automatisé (2) pour la mise en oeuvre du procédé selon la revendication 1, dans une cellule de brassage comprenant :
- une cuve (24),
- une pale de brassage (24bis)
- un moyen d'injection ou de prélèvement de fluide (25, 26, 261, 362, 363),
- des moyens d'observations microscopique et de mesure de diffusion, le réglage de l'épaisseur de l'échantillon étant réalisé par la descente automatique de la pale de brassage (24bis) grâce au monte et baisse (5), le système se repositionnant en rotation après les observations,
- des moyens de mesure de la viscosité, de température, de la conductivité,
et plusieurs sondes (34 et 36), positionnables en plusieurs points de la cuve et notamment à différentes hauteurs, comportant : des électrodes et plusieurs moyens de mesure d'impédance,
- tous ces moyens étant commandés et les résultats étant acquis stockés et affichés par des moyens informatiques (28, 29, 30, 32, 44 et synoptique S),
- tous ces moyens étant combinés et gérés par un logiciel et appliqués à une cellule de brassage, fournissant à l'opérateur un tableau de bord de l'évolution des caractéristiques dudit fluide dans une simulation de processus de fabrication,
- des mesures de la conductivité ou de la constance diélectrique étant réalisées en plusieurs endroits ou hauteurs de la cuve,
permettant ainsi :
- d'établir des corrélations entre l'évolution de paramètres physiques, l'observation des phénomènes macroscopiques et des mesures significatives lors d'une simulation de processus industriel,
- d'analyser l'homogénéisation ou la déstabilisation d'un fluide complexe au cours d'un processus de fabrication.

## Patentansprüche

1. Verfahren zur Charakterisierung von komplexen Fluiden, das darin besteht, die Fluide einer kontrollierten Scherbeanspruchung in einer herkömmlichen rheologischen Zelle oder einer turbulenten Scherbeanspruchung in einer Mischzelle gemäß verschiedenen Versuchsprotokollen zu unterziehen, indem der Schergrad bzw. Scherfaktor, die Temperatur, Einspritzungen von Bestandteilen variiert werden, und in Abhängigkeit von der Entwicklung der Parameter die Entwicklung:
- der mikroskopischen Struktur,
- der Viskosität,
- der Korngröße,
- der Leitfähigkeiten oder Dielektrizitätskonstanten in mehreren Richtungen und an mehreren Punkten zu beobachten und zu messen,
**dadurch gekennzeichnet, dass**
alle diese Messungen und Beobachtungen gleichzeitig an ein- und derselben Probe ausgeführt und gleichzeitig an einem Bildschirm angezeigt werden, und zwar mittels der mikroskopischen Beobachtung der Entwicklung physikalischer Erscheinungen wie z.B. der. Emulgierung, der Koaleszenz, der Verdünnung, der Ausflockung, der Dekantierung, und es möglich ist, Korrelationen herzustellen zwischen:
- den elektrischen Messungen der Korngröße, der Viskosität, der elektrischen Leitfähigkeit einerseits,
- und der Homogenität des Mediums, seiner Textur, seiner Stabilität, seinem Emulgiervermögen und der Wirksamkeit verschiedener Mischungsgeometrien des komplexen Fluids andererseits,
um Herstellungsprozesse von Emulsionen, Gelen, Verdünnungen, Schäumen zu steuern und zu kontrollieren.

2. Automatisierte Vorrichtung (1) zur Umsetzung des Verfahrens nach Anspruch 1, mit
- einem gesteuerten Schermittel (10) in einer herkömmlichen Analysezelle vom Couette-de-Mooney- oder Konus-Ebenen-Typ,
- einem Mittel zur mikroskopischen Beobachtung (38) während des Schervorgangs, mit:
- einem Mikroskop mit seinem Einstellsystem (362),
- einem System zur Beleuchtung (364,368), entweder direkt durch die Rotorwelle oder episkopisch, wobei der Rotor reflektierend ist,
- einer Digitalkamera (366) und ihrer Bilderfassungs- und Bildverarbeitungs-Elektronik,
- einem System zur Lichtstreuung und/oder zur Trübungskontrolle (38) mit:
- einer Laserquelle (381),
- einem Leuchtstoffschirm-System (384) und einem optischen System (383), die es ermöglichen, das für die Partikelgröße signifikante Streuungsspektrum (386) zu erhalten,
- einer Digitalkamera (385) und ihrer Bilderfassungs- und Bildverarbeitungs-Elektronik,
- einem System (366) zur Vorwärts- und Hin- und Herbewegung, das eine Horizontaleinstellung und die sukzessive Durchführung der mikroskopischen Beobachtungen und dann der Lichtstreuung ermöglicht,
- einem automatisches System (5) zum Anheben und Absenken, das eine Annäherung des Rotors an den Stator ermöglicht,
- Temperatursteuer- und -einstellmitteln (101 und 102),
- einem Mittel zum Messen der Viskosität (35),
- Mitteln zum Messen der elektrischen Leitfähigkeit oder der Dielektrizitätskonstante (31) mit:
- mehreren Elektrodenpaaren (310 bis 313), die mit der Innenfläche der Analysezelle in Berührung stehen,
- wobei alle diese Mittel durch EDV-Mittel gesteuert werden und die Ergebnisse durch diese ermittelt, gespeichert und angezeigt werden (28,29,30,32,44 und Synoptik S),
wobei die Kombination dieser Mittel die gleichzeitige Echtzeit-Ausführung an ein- und derselben Probe ermöglicht von:
- mikroskopischen Beobachtungen und von Größen- oder Trübungsmessungen durch Lichtstreuung sowohl an lichtdurchlässigen als auch an lichtstreuenden oder getrübten Erzeugnissen; wobei der Rotor konisch ist und sich das Mikroskop und die Streuvorrichtung horizontal verschieben, um die für eine gute Beobachtung geeignete Dicke auszuwählen,
- Messungen der Entwicklung der Viskosität,
- Messungen der Entwicklung der elektrischen Leitfähigkeit oder des durchschnittlichen spezifischen Widerstands in zwei Richtungen bezüglich der Scherrichtung,
mit einer spezifischen Software, die ein gleichzeitiges Verwalten der Gesamtheit dieser Mittel und die Anzeige der folgenden Daten in mehreren Fenstern des Bildschirms ermöglicht:
- der physikalischen Parameter und ihrer Entwicklung im Verlauf des Experiments in Form von Kurven (Fenster 203),
- der feststehenden oder dynamischen Bilder mikroskopischer Beobachtung (Fenster 204) und der Lichtstreuung (Fenster 205),
- der augenblicklichen Werte aller Messungen (Fenster 201) und der historischew Verlaufskurven des gesamten Versuchs (Fenster 202).

3. Vorrichtung nach Anspruch 2, wobei die Mittel zum Messen der Leitfähigkeit oder der Dielektrizitätskonstante (31) umfassen:
- mehrere Impedanz-Kontroll- bzw. Steuermittel (44),
wobei die Elektroden mit einem Drehschaltsystem (390) verbunden sind, das nacheinander die mit den Elektroden verbundene Polarität verändert, um zwei Impedanzen zu messen.

4. Automatisierte Vorrichtung (2) zur Anwendung des Verfahrens nach Anspruch 1 in einer Mischzelle, die umfasst:
- einen Behälter (24),
- einen Mischflügel (24bis)
- Fluideinspritz- oder -austragungsmittel (25,26,261, 362,363),
- Mittel zur mikroskopischen Beobachtung und zur Streuungsmessung, wobei die Regelung der Dicke der Probe durch automatisches Absenken des Misch- bzw. Rührflügels (24bis) mittels der Anhebe- und Absenkeinrichtung (5), wobei sich das System nach den Beobachtungen in Drehung neu positioniert,
- Mittel zum Messen der Viskosität, der Temperatur, der elektrischen Leitfähigkeit,
und mehrere Sonden (34 und 36), die an mehreren Punkten des Behälters und insbesondere auf verschiedenen Höhen positionierbar sind mit: Elektroden und mehreren Impedanz-Messmitteln,
- wobei alle diese Mittel von EDV-Mitteln gesteuert werden und die Ergebnisse durch diese ermittelt, gespeichert und angezeigt werden (28,29,30,32,44 und Synoptik S),
- wobei alle diese Mittel von einer Software kombiniert und verwaltet werden und auf eine Mischzelle angewandt werden, wobei der Bedienungsperson ein Statusbericht bzw. eine Trendgrafik der Entwicklung der Charakteristika des Fluids in einer Simulation des Herstellungsprozesses geliefert wird,
- wobei Messungen der Leitfähigkeit und der Dielektrizitätskonstante an mehreren Stellen oder Höhen des Behälters durchgeführt werden,
wodurch ermöglicht wird:
- Korrelationen zwischen der Entwicklung physikalischer Parameter, der Beobachtung makroskopischer Erscheinungen und signifikanten Messungen bei einer Simulation eines industriellen Prozesses herzustellen,
- die Homogenisierung oder die Destabilisierung eines komplexen Fluids im Verlauf eines Herstellungsprozesses zu analysieren.

## Claims

1. Process for the characterization of complex fluids consisting of subjecting said fluids to a controlled shear in a standard rheology cell or a turbulent shear in a mixing cell, in accordance with different experimental protocols varying the shearing rate, the temperature, the injections of the components, followed by the observation and measurement, as a function of the evolution of said evolution parameters:
- the microscopic structure,
- the viscosity,
- the size of the grains,
- dielectric constants or conductivities in several directions and at several points,
**characterized in that**:
- all these measurements and observations are carried out simultaneously on the same sample and are simultaneously displayed on the same screen, by means of the microscopic observation of the evolution of the physical phenomena such as.emulsification, coalescence, dilution, flocculation, settling, etc. and it is possible to establish correlations between:
- on the one hand the electrical measurements of the grain size, viscosity and electrical conductivity,
- and on the other hand the homogeneity of the medium, its texture, its stability, its emulsifying power and the effectiveness of the different mixing geometries of the complex fluid,
in order to control and check processes for the production of emulsions, gels, dilutions and foams.

2. Automated device (1) for performing the process according to claim 1 comprising:
- a controlled shearing means (10) in a standard analytical cell of the Couette, Mooney or planar cone type,
- a means (38) for microscopic observation under shear, comprising:
a microscope with its focussing system (362),
an illuminating system (364, 368), either direct through the rotor shaft, or episcopic, the rotor then being reflecting,
a digital camera (366) and its image acquisition and processing electronics,
a system (38) for the diffusion of light and/or checking the turbidity comprising:
a laser source (381),
a phosphor screen system (384) and an optical system (383) making it possible to obtain the significant diffusion spectrum (386) of the size of the particles,
a digital camera (385) and its image acquisition and processing electronics,
a displacement and reciprocating system (366) making it possible to effect horizontal focussing and successively perform microscopic observations and then light diffusion,
an automatic raising and lowering system (5) making it possible to move the rotor towards the stator,
means (101, 102) for controlling and regulating the temperature,
a viscosity measuring means (35),
a means (31) for measuring the conductivity or dielectric constant, comprising:
several pairs of electrodes (310-313) flush with the inner surface of the analytical cell,
all said means being controlled and the results being acquired, stored and displayed by information technology means (28, 29, 30, 32, 44 and synoptic means S),
the combination of said means making it possible to simultaneously perform in real time on the same sample:
microscopic observations and measurements of the size or turbidity by light diffusion on products which are both translucent and diffusing or turbid, the rotor being conical and the microscope and diffusing device moving horizontally in order to select the thickness appropriate for a good observation,
measurements of the viscosity evolution,
measurements of the evolution of the conductivity or mean resistivity in two directions relative to the shearing direction,
a specific software making it possible to simultaneously manage all these means and display in several windows of the screen:
the physical parameters and their evolution during the experiment in the form of curves (window 203),
fixed or dynamic images (window 204) of microscopic observation and diffusion of light (window 205),
the instantaneous values of all the measurements (window 201) and the historical curves of the complete experiment (window 202).

3. Device according to claim 2, wherein the means (31) for measuring the conductivity or dielectric constant can then comprise:
- several means (44) for controlling the impedance, the electrodes being connected to a rotary connector system (390) sequentially changing the polarity connected to electrodes in such a way as to measure two impedances.

4. Automated device (2) for implementing the process according to claim 1 in a mixing cell comprising:
- a tank (24),
- a mixing blade (24 bis),
- a fluid injection or sampling means (25, 26, 261, 362, 363),
- means for microscopic observation and diffusion measurement, the sample thickness regulation being carried out by the automatic lowering of the mixing blade (24 bis) as a result of rising and falling (5) the system being repositioned in rotation following the observations,
- means for measuring the viscosity, temperature and conductivity,
- and several probes (34, 36), positionable at several points of the tank and in particular at different heights comprising electrodes and several impedance measuring means,
- all said means being controlled and the results acquired, stored and displayed by information technology means (28, 29, 30, 32, 44 and synoptic means S),
- all these means being combined and managed by software and applied to a mixing cell, supplying the operator with a management chart of the evolution of the characteristics of said fluid in a production process simulation,
- measurements of the conductivity or dielectric constant being carried out at several locations or heights of the tank,
thus permitting:
- the establishment of correlations between the evolution of the physical parameters, the observation of macroscopic phenomena and significant measurements during an industrial process simulation,
- the analysis of the homogenization or destabilization of a complex fluid during a production process.
